(19) Europäisches Patentamt
European Patent Office
Office européen des brevets

(11) Veröffentlichungsnummer: **0 027 922**
**B1**

(12) # EUROPÄISCHE PATENTSCHRIFT

(45) Veröffentlichungstag der Patentschrift:
**23.11.83**

(51) Int. Cl.³: **D 21 C 5/02**

(21) Anmeldenummer: **80105989.0**

(22) Anmeldetag: **03.10.80**

(54) **Verfahren zur Entfernung von Pigmenten aus Altpapier.**

(30) Priorität: **16.10.79 DE 2941783**

(43) Veröffentlichungstag der Anmeldung:
**06.05.81 Patentblatt 81/18**

(45) Bekanntmachung des Hinweises auf die Patenterteilung:
**23.11.83 Patentblatt 83/47**

(84) Benannte Vertragsstaaten:
**AT CH DE FR GB IT LI NL SE**

(56) Entgegenhaltungen:
**DE - B - 2 756 711**
**DE - C - 904 762**
**FR - A - 482 267**
**FR - A - 1 245 417**
**GB - A - 1 347 971**
**US - A - 2 312 466**

(73) Patentinhaber: **HOECHST AKTIENGESELLSCHAFT,
Postfach 80 03 20, D-6230 Frankfurt am Main 80 (DE)**

(72) Erfinder: **Menschhorn, Fridolin, Handelskai 300 a/4/2/8, A-1020 Wien (AT)**
Erfinder: **Schönleitner, Ernst, Badweg 35, St. Aegyd am Neuwald (AT)**
Erfinder: **Teufel, Gerhard, Hauptstrasse 622, A-2763 Pernitz (AT)**
Erfinder: **Wertheimer, Paul, Hameaustrasse 31, A-1190 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 027 922 B1

# Verfahren zur Entfernung von Pigmenten aus Altpapier

Bei der Herstellung von Altpapier wird häufig auch bedrucktes Altpapier mitverwendet, um dadurch Rohstoffe zu sparen und Abfallstoffe wieder zu verwerten. Dabei gehen die beim Druck verwendeten Pigmente des Altpapiers mit in die aufbereitete Papiermasse und beeinflussen dadurch die Qualität nachteilig, da sie den Weissgrad herabsetzen und durch grössere, angefärbte Partikeln Schmutzpunkte am Papier erzeugen.

Es ist daher notwendig, diese Pigmentanteile weitgehend durch einen Flotationsvorgang aus der aufbereiteten Altpapiermasse zu entfernen. Dies erfolgt in der Weise, dass dem aufbereiteten Altpapier zunächst Alkalien, wie Ätznatron, Soda oder Natriumsilikat zugesetzt werden, um durch Angriff auf das Bindemittel eine Loslösung der Pigmentteilchen von der Faser zu bewirken. Sodann werden unter Zusatz geeigneter Chemikalien die Pigmentteilchen durch einen Flotationsvorgang aus dem Papierstoff entfernt.

Die zugesetzten Chemikalien sollen dabei zum einen die Bildung von Luftblasen begünstigen, welche die an sich spezifisch schweren Pigmentteilchen nach oben fördern sollen («Schäumer»). Zum anderen sollen die Chemikalien die Anlagerung der Pigmentteilchen an die Luftblasen fördern, so dass sich diese in dem gebildeten Schaum anreichern und mit ihm aus dem Prozess entfernt werden können («Sammler»). Die als Schäumer wirkenden Anteile bewirken nebenbei noch eine Dispergierung des meist nicht wasserlöslichen Sammlers.

Bisher werden als gängigste Substanzen für die Papierflotation Fettsäuren verwendet, die mit dem Alkali aus der Vorbehandlung Alkaliseifen bilden. Vielfach werden statt der Fettsäuren auch Alkaliseifen als Flotationsmittel eingesetzt. Die Alkaliseifen setzen sich mit den Härtebildnern des Wassers teilweise zu Kalk- und Magnesiaseifen um, und die noch verbleibende Alkaliseife wirkt als Schäumer und Dispergator, während die unlöslichen Erdalkaliseifen als Sammler fungieren.

Dieses an sich einfache Verfahren hat aber verschiedene Nachteile. So kommt es bei einer späteren Verschiebung des pH-Wertes in den sauren Bereich zur Ausscheidung von Fettsäuren, an der sich nachträglich noch nicht entfernte Pigmentteilchen agglomerisieren, was zu einer unerwünschten Fleckenbildung führt (Nachflotation). Diese freie Fettsäure kann Depots in den Leitungen bilden und ein Aufweichen mitgezogener Harzteilchen hervorrufen, was oft zum Abriss der Papierbahn führt. Da die Wirkung der eingesetzten Fettsäure vom Verhältnis Alkaliseife zu Erdalkaliseife abhängig ist, wird je nach Wasserhärte und Fettsäurekonzentration eine recht unterschiedliche Schaumbildung und Sammlerwirkung erzielt. Wird das System durch zu viel Alkaliseife zu hydrophil, kommt es zu erhöhter Schaumbildung und zu einer Flotation der Zellulosefasern, was zu hohen Stoffverlusten führt. Wird es durch zu hohe Anteile an Erdalkaliseifen zu hydrophob, kommt es durch fehlenden Dispergator zu einer schlechten Sammlerwirkung und dadurch zu keinem optimalen Ausscheiden der Schmutzteilchen. Auch an den Eindickern kann es durch zu hydrophile Systeme zu hohen Verlusten an Faserstoff kommen. Die Wirkung der Seifen schwankt somit in Abhängigkeit von der Härte des Wassers.

Es hat daher nicht an Versuchen gefehlt, die Fettsäuren bzw. deren Alkaliseifen durch andere Stoffe ganz oder teilweise zu ersetzen. So kann durch Zusatz von Natriumsilikat die Wirkung der Seife etwas verbessert werden. Es kommt aber dann oft zu Schwierigkeiten bei der Abwasserreinigung und zu schwer entfernbaren Ablagerungen an Filzen und Trockenzylindern. W. Kolb (Wochenbl. für Papierfabrikation 4.77) empfiehlt Kombinationen aus nichtionogenen Tensiden (Fettalkoholäthoxylaten). In DD-A-235 3771 werden Alkyllactame und Alkylpyrrolidone vorgeschlagen. Das DD-A-214 3912 beschreibt die Anwendung von Äthylen- und Propylenoxydaddukten, wobei die zur Erzielung einer Sammlerwirkung nötige Hydrophobie durch Anwendung von Temperaturen über deren Trübungspunkt erreicht wird. Alle diese Produkte haben aber den Nachteil, dass sie gegenüber den Seifen relativ hohe Gestehungskosten haben.

Ein Verfahren zum De-inken von Altpapier mit Glykolestern als Sammler ist in der DE-B 2 756 711 erwähnt, doch werden keinerlei Angaben über die genaue Struktur dieser Glykolester gemacht. Weitere Verfahren zur Entfernung von Pigmenten aus Altpapier sind in der FR-A 1 265 417 und in der GB-A 1 347 971 beschrieben. Bei diesen Verfahren handelt es sich jedoch nicht um Flotationsverfahren, sondern um sogenannte Waschverfahren. Die DE-C 904 762 und die US-A 2 312 466 beschreiben Flotationsmittel und Flotationsverfahren zur Aufbereitung von Erzen und Salzen, aber nicht von Pigmenten, wobei speziell in der US-A 2 312 466 die Verwendung des Butylesters einer Fettsäure mit 18 Kohlenstoffatomen als Sammler beschrieben ist. Die Flotation von Pigmenten erfordert aber wegen der unterschiedlichen chemischen und physikalischen Konstitution der Substrate völlig andere Flotationsmittel als die Erzflotation.

Es wurde nun gefunden, dass geeignete Carbonsäureester eine sehr gute Sammlerwirkung besitzen. Wenn man ihnen eine entsprechende, relativ kleine Menge an Tensiden zusetzt, die als Schäumer und Dispergator wirken, lässt sich durch eine solche Kombination eine hervorragende Flotationswirkung erzielen.

Gegenstand der Erfindung ist somit ein Verfahren zur Entfernung von Pigmenten bei der Aufbereitung von Altpapier durch Flotation, dadurch gekennzeichnet, dass man die Pigmente mit einem Ester der Formel

$$RCOOR^1$$

flotiert, wobei $R^1$ $C_1$–$C_8$-Alkyl und R $C_{12}$–$C_{20}$-Alkyl oder $C_{12}$–$C_{20}$-Alkenyl bedeutet.

Bei den Estern der obigen Formel handelt es sich um Fettsäureester von Alkoholen niederer und mittlerer Kettenlänge. Bevorzugt sind die Fettsäureester von einwertigen Alkoholen mit 4 bis 8 C-Atomen. Als Schäumer bei der Flotation dienen kationische, anionische und nicht-ionische Tenside wie beispielsweise Seifen, Alkansulfonate, Alkylbenzolsulfonate, Alkylsulfate, Sulfobernsteinsäureester oder vorzugsweise oxäthylierte Fettsäuren und oxäthylierte Alkylphenole, gegebenenfalls in Form deren Äthersulfate. Die Menge dieser Tenside beträgt bis zu 10 Gew.-%, vorzugsweise 2 bis 5 Gew.-%, bezogen auf den Carbonsäureester. Die in den Estern oft noch vorhandene freie Carbonsäure kann, vor allem wenn es sich um eine Fettsäure handelt im alkalischen Bereich die Tensidfunktion des Schäumens und Dispergierens ganz oder teilweise übernehmen. Auch in diesem Fall ist dann im sauren Bereich die Menge der abgeschiedenen Säuren so gering, dass es nicht zu den oben erwähnten Schwierigkeiten kommt.

Die Einsatzmenge der beschriebenen Flotationsmittel beträgt ca. 2 bis 6 kg je Tonne Altpapier und beträgt damit weniger als die Hälfte der Menge an Seife, die bisher benutzt wurde.

Die Vorteile der erfindungsgemässen Flotationsmittel sind darin zu sehen, dass man eine wesentlich geringe Menge dieses Mittels benötigt als bei den Seifen. Ausserdem ist die Wirkung des erfindungsgemässen Flotationsmittels unabhängig vom pH-Wert des Wassers und dessen Härte. Auch kommt es im neutralen und sauren Bereich zu keiner Nachflotation, Aufweichen von Harzteilchen oder Abscheidungen. Als ein weiterer Vorteil für die Praxis hat sich erwiesen, dass mit dem erfindungsgemässen Flotationsmittel die Entwässerungsgeschwindigkeit an den auf die Flotation folgenden Eindickern ohne Zusatz von Entwässrungsmitteln wesentlich erhöht werden kann.

Beispiel 1

Eine Mischung von 960 kg Talgfettsäureisopentylester, hergestellt nach einem der üblichen Veresterungsverfahren mit einer Säurezahl von 5 und 40 kg Nonylphenoläthoxylat mit 6 AeO wird in Mengen von 3 bis 4 kg je Tonne Altpapier in den Pulper bei einer Stoffkonzentration von ca. 6% eingebracht. Die sammelnde Wirkung ist besser als die einer bisher eingesetzten Mischung von 13 kg Natronseife und 30 kg Na-metasilikat je Tonne Altpapier. In der gleichen Weise wie hier beschrieben, wurden auch die folgenden Flotationsmittel eingesetzt.

Beispiel 2

Mischung von 980 kg Ölsäureisooctylester mit einer Säurezahl von 10 und 20 kg Ölsäurepolyglykolester mit einer Säurezahl von 10, hergestellt aus Polyäthylenglykol mit einem Molgewicht von 1000.

**Patentansprüche**

1. Verfahren zur Entfernung von Pigmenten bei der Aufbereitung von Altpapier durch Flotation, dadurch gekennzeichnet, dass man die Pigmente mit einem Ester der Formel

$$RCOOR^1$$

flotiert, wobei $R^1$ $C_1$–$C_8$-Alkyl und R $C_{12}$–$C_{20}$-Alkyl oder $C_{12}$–$C_{20}$-Alkenyl bedeutet.

2. Verfahren nach Anspruch 1, dadurch gekennzeichnet, dass man neben dem Ester zusätzlich noch bis zu 10 Gew.-%, bezogen auf den Ester, einer oberflächenaktiven Verbindung mitverwendet.

3. Verfahren nach Anspruch 2, dadurch gekennzeichnet, dass man neben dem Ester zusätzlich noch 2 bis 5 Gew.-%, bezogen auf den Ester, einer oberflächenaktiven Verbindung mitverwendet.

4. Verfahren nach Anspruch 2 oder 3, dadurch gekennzeichnet, dass man neben dem Ester zusätzlich noch oxäthylierte Fettsäure oder oxäthyliertes Alkylphenol als oberflächenaktive Verbindung mitverwendet.

**Claims**

1. Process for removing pigments in the reprocessing of waste paper by flotation which is characterized by floating the pigments with an ester of the formula

$$RCOOR^1$$

wherein $R^1$ in $C_1$–$C_8$-alkyl and R is $C_{12}$–$C_{20}$-alkyl or $C_{12}$–$C_{20}$-alkenyl.

2. Process as claimed in claim 1 which is characterized by using in addition to the ester up to 10% by weight, referred to the weight of the ester, of a surface active compound.

3. Process as claimed in claim 2 which is characterized by using in addition to the ester 2 to 5% by weight, referred to the weight of the ester, of a surface active compound.

4. Process as claimed in claims 2 or 3 which is characterized by using in addition to the ester oxethylated fatty acid or oxethylated alkylphenol as surface active compound.

**Revendications**

1. Procédé pour éliminer des pigments dans le retraitement de vieux papiers par flottation, procédé caractérisé en ce que l'on fait flotter les pigments avec un ester de formule

$$RCOOR^1$$

dans laquelle le symbole $R^1$ représente un alkyle en $C_1$ à $C_8$ et R un alkyle ou un alcényle en $C_{12}$ à $C_{20}$.

2. Procédé selon la revendication 1 caractérisé en ce qu'en plus de l'ester, on ajoute également

jusqu'à 10%, du poids de l'ester, d'une substance tensio-active.

3. Procédé selon la revendication 2 caractérisé en ce que l'on ajoute 2 à 5%, du poids de l'ester, de la substance tensio-active.

4. Procédé selon la revendication 2 ou 3, caractérisé en ce que l'on ajoute comme substance tensio-active un acide gras oxéthylé ou un alkylphénol oxéthylé.